Europäisches Patentamt

European Patent Office

Office européen des brevets

(11) Veröffentlichungsnummer: **0 411 361 A2**

## (12) EUROPÄISCHE PATENTANMELDUNG

(21) Anmeldenummer: **90113346.2**

(22) Anmeldetag: **12.07.90**

(51) Int. Cl.⁵: **A01K 5/02**

(30) Priorität: **01.08.89 DE 8909314 U**

(43) Veröffentlichungstag der Anmeldung:
**06.02.91 Patentblatt 91/06**

(84) Benannte Vertragsstaaten:
**AT BE DE DK FR GB IT NL**

(71) Anmelder: **ARATOWERK WALTER VON TASCHITZKI GmbH & CO. KG KG**
**Alte Forststrasse 55**
**D-5000 Köln-Rath (Heumar)(DE)**

(72) Erfinder: **Von Taschitzki, Martin, Dipl.-Ing. agr.**
**Alte Forststrasse 55**
**D-5000 Köln 91(DE)**

(74) Vertreter: **Schönwald, Karl, Dr. et al**
**Patentanwälte von Kreisler, Selting, Werner**
**Deichmannhaus am Hauptbahnhhof**
**D-5000 Köln 1(DE)**

(54) **Vorrichtung zur Versorgung von Tieren mit Nahrung.**

(57) Die Vorrichtung zur Versorgung von Tieren mit schüttfähigem Futter und dergleichen weist ein Vorrichtungsgehäuse (1) auf, das mit seinen Außenwänden (3,4,5,6) sich mindestens zum Teil mehr oder weniger stark nach unten zum Futtertrog (7) hin trichterförmig verjüngt. Die Vorderwand (3) oberhalb des Futtertroges (7) weist eine auf Größe und Gestalt des Kopfes der zu fütternden Tierart abgestimmte Durchschlupföffnung (21) auf. Ein Flüssigkeitsspender (15) ist über dem Futtertrog (7) oberhalb der Auslaßöffnung des Futtervorratsbehälters (9) angeordnet.

FIG.1

EP 0 411 361 A2

## VORRICHTUNG ZUR VERSORGUNG VON TIEREN MIT NAHRUNG

Die Erfindung bezieht sich auf eine Vorrichtung zur Versorgung von Tieren, die sowohl schüttfähiges Futter als auch eine Flüssigkeit, insbesondere Wasser, spendet, und bei der ein Futtertrog, ein Futtervorratsbehälter und eine Tränkvorrichtung vorgesehen sind.

Fütterungsvorrichtungen, sogenannte Futterautomaten, sind in verschiedenen Ausführungen bekannt. Wenn sie mit einem zusätzlichen Wasserspender ausgerüstet sind, der es den Tieren ermöglicht, sich im Trog das schüttfähige Futter anzufeuchten, nennt man sie Breiautomaten. Diese sind bisher als kastenförmige Gestelle be kannt, bei denen die Seitenwände senkrecht verlaufen und nur der Boden des Futterbehälters nach unten, zur hinteren Kante des Troges hin schräg eingebaut ist. Da das Futter jedoch kegelförmig nachrutscht, bilden sich oft in den unteren, seitlichen Bereichen des Futterbehälters trotz aufwendiger Rüttelvorrichtungen gewisse Stauzonen, in denen das Futter verdirbt, weil es zu lange im Behälter verweilt.

Ein weiterer Nachteil entsteht aus der nach vorn offenen Bauweise, indem das Tier, welches gerade frißt, von den anderen beobachtet werden kann und somit einen Futterneid erregt und von den anderen Tieren bedrängt wird, wobei besonders die ungeschützten Ohren zur Aggression reizen. Wenn solche Rangordnungskämpfe am Futtertrog ausgetragen werden können, führt das nicht nur zu Verlusten, weil dabei ein nicht unbeträchtlicher Teil des Futters verstreut und vergeudet wird; sondern dieser Streß an der Futterkrippe führt auch zu hastigem Fressen. Da diese Beeinträchtigung des allgemeinen Wohlbefindens aber für die Verdauung schädlich ist, ergibt sich dadurch ebenfalls ein nicht unbedeutender Futterverlust.

Breiautomaten, welche außer dem schüttfähigen Futter auch Flüssigkeit spenden, vermeiden zwar den Nachteil der reinen Futterautomaten, daß sich die Tiere zwischen Futter und Tränke hin und her bewegend einen Teil des Futters vergeuden. Die Erfahrung zeigt aber, daß es nicht gleichgültig ist, wie der Wassespender innerhalb der Fütterungsvorrichtung angeordnet ist, weil von seiner Position ein großer Teil der Bequemlichkeit des Tieres bei der Futteraufnahme abhängt, was sich mittelbar, infolge der besser durchgekauten Nahrung, auf die Verdaulichkeit und die Futterverwertungsrate auswirkt.

Aufgabe der Erfindung ist es, eine Fütterungsvorrichtung zu schaffen, welche Futterverluste vermeidet, die einerseits durch die Formgebung des Behälters bedingt sind und andererseits durch Rangordnungskämpfe verursacht werden, und ferner den Futteraufnahmevorgang für das Tier streßärmer macht, um dadurch zusätzlich eine bessere Futterverwertung und höhere Mastleistung zu erzielen. Die Aufgabe der Erfindung wird dadurch gelöst, daß sich das Vorrichtungsgehäuse mit seinen Außenwänden mindestens zum Teil mehr oder weniger stark nach unten zum Futtertrog hin trichterförmig verjüngt, daß die Vorderwand oberhalb des Futtertroges eine auf Größe und Gestalt des Kopfes der zu fütternden Tierart abgestimmte Durchschlupföffnung aufweist und daß ein Flüssigkeitsspender über dem Futtertrog oberhalb der Auslaßöffnung des Futtervorratsbehälters angeordnet ist.

Durch eine solche Gestaltung der Vorrichtung und Anordnung der Teile ergibt sich eine Kombination von wesentlichen Vorteilen. Durch die konische Ausbildung des Gehäuses selbst erhält der Futtervorratsbehälter von sich aus ringsum eine nach unten verlaufende, sich verjüngende Form, welche die Bildung von Stauzonen wesentlich vermindert, so daß der für eine Rüttelvorrichtung notwendige Aufwand vermindert wird. Die Anordnung des Flüssigkeitsspenders über dem Trog und oberhalb der Auslaßöffnung des Futterbehälters vermeidet feuchte Ecken im Trog, weil das beim Trinken gelegentlich verschüttete Wasser sogleich mit dem nächsten Futterhappen aufgenommen wird. Die bis auf die der Größe und Gestalt des zu fütternden Tieres angepaßte Durchschlupföffnung geschlossene Vorderwand der Vorrichtung schützt das Tier vor Aggressionen und verhindert Rangordnungskämpfe am Futtertrog und die dadurch sonst verursachten Verluste. Somit erzielt diese Fütterungsvorrichtung durch Streßverminderung und Vermeidung von Futterverlusten eine erhebliche Steigerung des Erfolges bei der Verwertung des Futters.

Gemäß einem weiteren Merkmal der Erfindung verläuft der Boden des Futterbehälters in dem Gehäuse schräg nach hinten und bildet über dem rückwärtigen Teil des Futtertroges zugleich eine Schürze, hinter der das Futter in den Trog rieseln kann. Vorteilhaft kann diese Schürze zugleich als Träger des Flüssigkeitsspenders dienen, welcher somit auf einfachste Weise oberhalb des Troges angeordnet werden kann.

Die Zuführungsleitung für die Flüssigkeit verläuft im Bereich des Futtertroges zweckmäßig bis zur Mitte des rückwärtigen Bereiches des Futtertroges und der Schürze, welche den Flüssigkeitsspender trägt. Außerdem kann diese Schürze noch eine leichte Rüttelvorrichtung tragen, mit der das Tier das Nachrieseln des Futters beschleunigen kann. Dadurch ergibt sich eine erhebliche Vereinfachung im Aufbau gegenüber den bisher als Breiautomaten bekannten Vorrichtungen.

Die Erfindung wird anhand einer in der Zeichnung dargestellten Ausführungsform nachstehend erläutert:

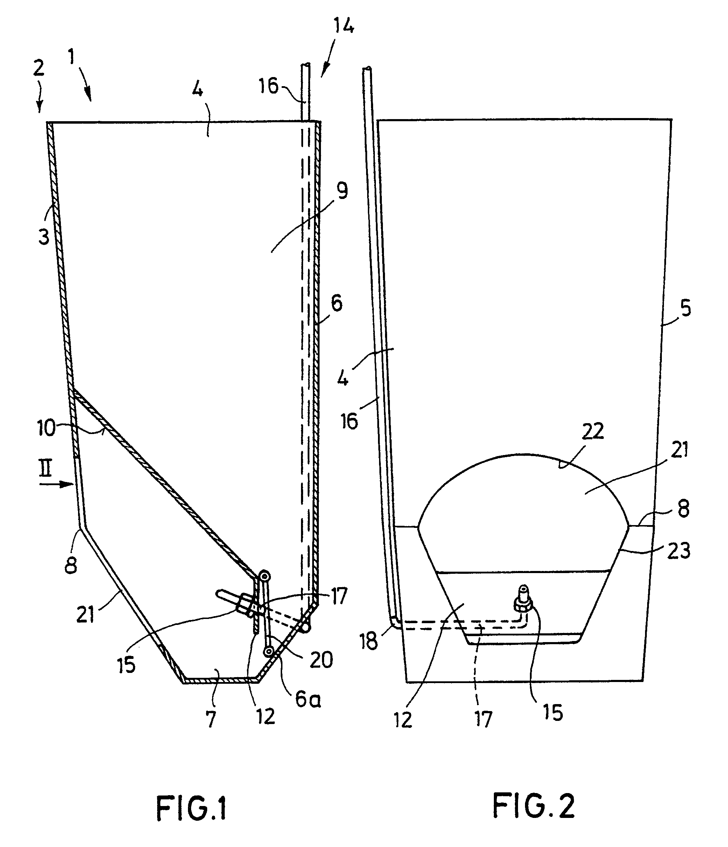

Figur 1 zeigt die Fütterungsvorrichtung der Erfindung im Aufriß sowie im Längsschnitt schematisch,

Figur 2 ist eine Vorderansicht der Vorrichtung der Figur 1 in Richtung des Pfeiles II.

Die Vorrichtung 1 zur Versorgung von Tieren mit fester und flüssiger Nahrung besteht aus einem Gehäuse 2 mit der Vorderwand 3, den Seitenwände 4 und 5 und der, Rückwand 6, wobei diese Außenwände 3, 4, 5, 6 zum Futtertrog 7 hin sich mindestens zum Teil mehr oder weniger stark nach unten hin trichterförmig verjüngen. Die Verjüngung der Seitenwände 4 und 5 und der Rückwand 6 kann stetig verlaufen, während die Verjüngung der Vorderwand 3 mit einem nach innen gerichteten Knick 8 vorgesehen ist. Die Rückwand 6 ist zweckmäßig im Bereich des Futtertroges 7 mit einem nach innen abgeknickten Wandteil 6a versehen. Die sich verjüngenden Wände 3, 4, 5 6 umschließen den Futtervorratsbehälter 9, der mit einem Boden 10 versehen ist, der von der Vorderwand 3 schräg nach hinten verläuft und in einem vorbestimmten Abstand vor der Rückwand 6 endet.

Am Ende des Behälterbodens 10 ist über dem rückwärtigen Teil des Futtertroges 7 eine Schürze 12 vorgesehen, welche als Verlängerung des Behälterbodens 10 nach unten oder als selbständiges Teil ausgebildet sein kann. Hinter der Schürze 12 gelangt das Futter in den Futtertrog 7. Die Schürze 12 ist in dem Gehäuse 2 vorteilhaft fest angeordnet. Sie kann aber auch verstellbar vorgesehen sein.

Die Zuführung der Flüssigkeit, vorzugsweise Wasser, erfolgt über eine Leitung 14 zu dem Flüssigkeitsspender 15, der Beispielsweise als Zapfentränker ausgebildet sein kann. Die Zuführungsleitung 14 weist einen Leitungsteil 16 auf, der längs der Schrägwand 5 nach unten führt. In der Mitte des rückwärtigen Teiles des Futtertroges verläuft sodann ein weiteres Leitungsteil 17 bis zur Schürze 12, wobei eine Verbindungsleitung 18 vorgesehen ist. Das Leitungsteil 17 ist durch die Schürze 12 hindurchgeführt und mit dem Flüssigkeitsspender 15 verbunden. An der Rückseite der Schürze 12 kann zusätzlich eine Rüttelvorrichtung 20 vorgesehen sein, welche vom Tier hin und her bewegt werden kann, um das Nachrieseln des Futters zu beschleunigen.

In der Vorderwand 3 des Gehäuses 2 befindet sich eine Öffnung 21, die auf die Größe und Gestalt des Kopfes der zu fütternden Tiere abgestimmt ist und bei der Futteraufnahme als Durchschlupf für den Tierkopf samt den Ohren dient. Die Durchschlupföffnung 21 kann von der Knicklinie 8 nach oben hin in einem Bogen 22 verlaufen, während die Ränder 23 der Durchschlupföffnung 21 sich nach unten hin einander annähern.

## Ansprüche

1. Vorrichtung zur Versorgung von Tieren, die sowohl schüttfähiges Futter als auch eine Flüssigkeit, insbesondere Wasser, spendet und bei der ein Futtertrog, ein Futtervorratsbehälter und eine Tränkvorrichtung vorgesehen sind, dadurch gekennzeichnet, daß das Vorrichtungsgehäuse (1) mit seinen Außenwänden (3, 4, 5, 6) sich mindestens zum Teil mehr oder weniger stark nach unten zum Futtertrog (7) hin trichterförmig verjüngt, daß die Vorderwand (3) oberhalb des Futtertroges (7) eine auf Größe und Gestalt des Kopfes der zu fütternden Tierart abgestimmte Durchschlupföffnung (21) aufweist und daß ein Flüssigkeitsspender (15) über dem Futtertrog (7) oberhalb der Auslaßöffnung des Futtervorratsbehälters (9) angeordnet ist.

2. Vorrichtung nach Anspruch 1, dadurch gekennzeichnet, daß der Boden (10) des Futtervorratsbehälters (9) schräg nach hinten verläuft und daß eine Schürze (12) über dem rückwärtigen Teil des Futtertroges (7) angeordnet ist, welche als Verlängerung des Behälterbodens (10) oder als selbständiges Teil ausgebildet sein kann.

3. Vorrichtung nach Anspruch 1 oder 2, dadurch gekennzeichnet, daß der Flüssigkeitsspender (15) an der Schürze (12) befestigt ist.

4. Vorrichtung nach einem der Ansprüche 1 bis 3, dadurch gekennzeichnet, daß eine Zuführungsleitung (14) für die Flüssigkeit im rückwärtigen Bereich des Futtertroges (7) bis zur Mitte der Schürze (12) geführt ist.

5. Vorrichtung nach einem der Ansprüche 1 bis 4, dadurch gekennzeichnet, daß die über dem rückwärtigen Teil des Futtertroges (7) angeordnete Schürze (12) zusätzlich eine Rüttelvorrichtung (20) trägt, welche von dem Tier hin und her bewegt werden kann, um das Nachrieseln des Futters zu beschleunigen.

6. Vorrichtung nach einem der Ansprüche 1 bis 5, dadurch gekennzeichnet, daß die Durchschlupföffnung (21) im oberen Teil bogenförmig (22) gestaltet ist und im unteren Teil Seitenbegrenzungen (23) aufweist, die schräg nach unten zueinander zulaufen.

FIG.1                    FIG.2